# EUROPEAN PATENT SPECIFICATION

(11) **EP 4 098 700 B1**
(45) Date of publication and mention of the grant of the patent: **07.10.2026**
(21) Application number: 22176327.9
(22) Date of filing: 31.05.2022
(51) Int. Cl.: C08L 69/00

(54) **THERMOPLASTIC RESIN COMPOSITION AND MOLDED ARTICLE PRODUCED THEREFROM**
THERMOPLASTISCHE HARZZUSAMMENSETZUNG UND DARAUS HERGESTELLTER FORMARTIKEL
COMPOSITION DE RÉSINE THERMOPLASTIQUE ET ARTICLE MOULÉ AINSI PRODUIT

(30) Priority: 31.05.2021 KR 20210069642
(43) Date of publication of application: 07.12.2022
(73) Proprietor: Lotte Chemical Corporation, Seoul, 05551 (KR)
(72) Inventor: CHOI, Ki Hong, 16073 Gyeonggi-do (KR); KANG, Tae Gon, 16073 Gyeonggi-do (KR); SHIN, Dong Yeop, 16073 Gyeonggi-do (KR); SHIN, Ye Seul, 16073 Gyeonggi-Do (KR); YANG, Sung Woo, 16073 Gyeonggi-do (KR); LEE, Seo Yun, 16073 Gyeonggi-Do (KR); HA, Dong In, 16073 Gyeonggi-do (KR)
(74) Representative: Germain Maureau

(56) References cited:
- EP-A1- 3 527 623
- US-A1- 2020 071 520

## Description

### Field of the Invention

The present invention relates to a thermoplastic resin composition and a molded article produced therefrom. More particularly, the present invention relates to a thermoplastic resin composition having good properties in terms of light shielding, impact resistance, dimensional stability, flame retardancy, and balance therebetween, and a molded article produced therefrom.

### Description of the Related Art

Thermoplastic resin compositions are useful for housings of electrical/electronic products, automotive interior/exterior materials, and exterior materials for buildings due to lower specific gravity than glass or metal, good moldability, and good impact resistance. Particularly, with the trend toward larger and lighter electrical/electronic products, plastic products produced from thermoplastic resins are rapidly replacing typical glass and metal-based products in the art.

Among such thermoplastic resin compositions, a thermoplastic resin composition prepared by blending a polycarbonate (PC) resin with an aromatic vinyl copolymer resin, such as an acrylonitrile-butadiene-styrene (ABS) copolymer resin and the like, is used in various fields since the thermoplastic resin composition enables cost reduction and improvement in processability, chemical resistance and other properties without deterioration in impact resistance and heat resistance of a polycarbonate resin.

When such a PC/ABS-based thermoplastic resin composition is applied to a housing material for electric/electronic products, it is important to prevent transmission of light through the housing material. EP 3 527 623 A1 relates to a thermoplastic resin composition, which can achieve high gloss and good external appearance characteristics while securing good properties in terms of flowability, impact resistance, thermal resistance, thin film flame retardancy, dimensional stability, and the like, and a molded product formed therefrom.

However, the thermoplastic resin composition containing pigments and inorganic fillers for light shielding can suffer from deterioration in mechanical properties comprising impact resistance, flame retardancy, and the like.

Therefore, there is a need for development of a thermoplastic resin composition having good properties in terms of light shielding, impact resistance, dimensional stability, flame retardancy, and balance therebetween.

The background technique of the present invention is disclosed in Korean Patent Registration No. 10-1534336 and the like.

### Summary of the Invention

It is one aspect of the present invention to provide a thermoplastic resin composition having good properties in terms of light shielding, impact resistance, dimensional stability, flame retardancy, and balance therebetween, and a molded article produced therefrom.

One aspect of the present invention relates to a thermoplastic resin composition according to appended claims 1-8.

Another aspect of the present invention relates to a molded article according to appended claims 9-10.

### Brief Description of the Drawings

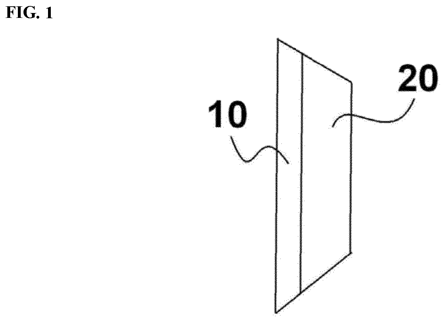

FIG. 1 a schematic sectional view of an electronic device housing according to one embodiment of the present invention.

### Detailed Description of the Invention

Hereinafter, embodiments of the present invention will be described in detail.

A thermoplastic resin composition according to the present invention comprises: (A) a polycarbonate resin; (B) a rubber-modified aromatic vinyl copolymer resin; (C) talc; (D) acicular inorganic fillers; (E) a phosphorus flame retardant.

As used herein to represent a specific numerical range, "a to b" means "≥ a and ≤ b".

### (A) Polycarbonate resin

The polycarbonate resin according to one embodiment may comprise any typical polycarbonate resin used in thermoplastic resin compositions. For example, the polycarbonate resin may be an aromatic polycarbonate resin prepared by reacting diphenols (aromatic diol compounds) with a precursor, such as phosgene, halogen formate, or carbonate diester.

In some embodiments, the diphenols may comprise, for example, 4,4'-biphenol, 2,2-bis(4-hydroxyphenyl)-propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of 0.05 mol% to 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin prepared by polymerization in the presence of an ester precursor, for example, a bifunctional carboxylic acid.

In some embodiments, the polycarbonate resin may have a weight average molecular weight (Mw) of 18,000 g/mol to 50,000 g/mol, for example, 25,000 g/mol to 40,000 g/mol, as measured by gel permeation chromatography (GPC). Within this range, the thermoplastic resin composition can have good impact resistance, fluidity (processability), and the like.

In some embodiments, the polycarbonate resin may have a melt-flow index (MI) of 5 g/10 min to 80 g/10 min, as measured at 300°C under a load of 1.2 kgf in accordance with ISO 1133. Alternatively, the polycarbonate resin may be a mixture of at least two polycarbonate resins having different melt flow indexes.

### (B) Rubber-modified aromatic vinyl copolymer resin

A rubber-modified aromatic vinyl copolymer resin according to one embodiment may comprise (B1) a rubber-modified vinyl graft copolymer, or (B1) a rubber-modified vinyl graft copolymer and (B2) an aromatic vinyl copolymer resin.

### (B 1) Rubber-modified vinyl graft copolymer

The rubber-modified vinyl graft copolymer according to one embodiment may be prepared by graft polymerization of a monomer mixture comprising an aromatic vinyl monomer and a monomer copolymerizable with the aromatic vinyl monomer to a rubber polymer. For example, the rubber-modified vinyl graft copolymer may be prepared by graft polymerization of the monomer mixture comprising the aromatic vinyl monomer and the monomer copolymerizable with the aromatic vinyl monomer to the rubber polymer, in which the monomer copolymerizable with the aromatic vinyl monomer comprises a vinyl cyanide monomer, a monomer for imparting processability and heat resistance, or a combination thereof. Here, polymerization may be performed by any polymerization method known in the art, such as emulsion polymerization, suspension polymerization, and the like. In addition, the rubber-modified vinyl graft copolymer may have a core (rubber polymer)-shell (copolymer of the monomer mixture) structure, without being limited thereto.

In some embodiments, the rubber polymer may comprise, for example, diene rubbers, such as polybutadiene and poly(acrylonitrile-butadiene); saturated rubbers prepared by adding hydrogen to the diene rubbers; isoprene rubbers; C₂ to C₁₀ alkyl (meth)acrylate rubbers; a copolymer of C₂ to C₁₀ alkyl (meth)acrylate and styrene; and ethylene-propylene-diene monomer terpolymer (EPDM). These may be used alone or as a mixture thereof. For example, the rubber polymer may comprise diene rubbers and (meth)acrylate rubbers, specifically butadiene rubbers and butyl acrylate rubbers.

In some embodiments, the rubber polymer (rubber particle) may have an average particle diameter of 0.05 µm to 6 µm, for example, 0.15 µm to 4 µm, specifically 0.25 µm to 3.5 µm. Within this range, the thermoplastic resin composition can have good properties in terms of impact resistance, external appearance, and the like. Here, the average particle diameter (z-average) of the rubber polymer (rubber particles) may be measured by a light scattering method in a latex state. Specifically, a rubber polymer latex is filtered through a mesh to remove coagulum generated during polymerization of the rubber polymer. Then, a mixed solution of 0.5 g of the latex and 30 ml of distilled water is placed in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Malvern Co., Ltd., Nano-zs).

In some embodiments, the rubber-modified vinyl graft copolymer may include the rubber polymer in an amount of 20 wt% to 80 wt%, for example, 25 wt% to 70 wt%, based on 100 wt% of the rubber-modified vinyl graft copolymer. In some embodiments, the rubber-modified vinyl graft copolymer may include the rubber polymer in an amount of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80 wt%, based on 100 wt% of the rubber-modified vinyl graft copolymer. Further, according to some embodiments, the rubber polymer can be present in an amount of from any of the foregoing amounts to any other of the foregoing amounts.

In some embodiments, the rubber-modified vinyl graft copolymer may include the monomer mixture in an amount of 20 wt% to 80 wt%, for example, 30 wt% to 75 wt%, based on 100 wt% of the rubber-modified vinyl graft copolymer. In some embodiments, the rubber-modified vinyl graft copolymer may include the monomer mixture in an amount of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80 wt%, based on 100 wt% of the rubber-modified vinyl graft copolymer. Further, according to some embodiments, the monomer mixture can be present in an amount of from any of the foregoing amounts to any other of the foregoing amounts.

Within this range, the thermoplastic resin composition can have good properties in terms of impact resistance, heat resistance, processability, external appearance, and the like.

In some embodiments, the aromatic vinyl monomer may be graft copolymerizable with the rubber polymer and may comprise, for example, styrene, α-methyl styrene, β-methyl styrene, p-methyl styrene, p-t-butyl styrene, ethyl styrene, vinyl xylene, monochlorostyrene, dichlorostyrene, dibromostyrene, vinyl naphthalene, and the like. These may be used alone or as a mixture thereof. The monomer mixture may include the aromatic vinyl monomer in an amount of 10 wt% to 90 wt%, for example, 20 wt% to 80 wt%, based on 100 wt% of the monomer mixture. In some embodiments, the monomer mixture may include the aromatic vinyl monomer in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%, based on 100 wt% of the monomer mixture. Further, according to some embodiments, the aromatic vinyl monomer can be present in an amount of from any of the foregoing amounts to any other of the foregoing amounts. Within this range, the thermoplastic resin composition can have good properties in terms of processability, impact resistance, and the like.

In some embodiments, the vinyl cyanide monomer is copolymerizable with the aromatic vinyl monomer, and may comprise, for example, acrylonitrile, methacrylonitrile, ethacrylonitrile, phenyl acrylonitrile, α-chloroacrylonitrile, fumaronitrile, and the like. These may be used alone or as a mixture thereof. For example, the vinyl cyanide monomer may comprise acrylonitrile, methacrylonitrile, and the like. In addition, the monomer for imparting processability and heat resistance may comprise, for example, (meth)acrylic acid, C₁ to C₁₀ alkyl (meth)acrylates, maleic anhydride, and N-substituted maleimide, without being limited thereto.

In some embodiments, the rubber-modified vinyl graft copolymer may comprise a copolymer (g-ABS) prepared by grafting a styrene monomer as the aromatic vinyl compound and an acrylonitrile monomer as the vinyl cyanide compound to a butadiene rubber polymer, a copolymer (g-MBS) prepared by grafting a styrene monomer as the aromatic vinyl compound and methyl methacrylate as the monomer copolymerizable therewith to a butadiene rubber polymer, a copolymer (g-MABS) prepared by grafting a styrene monomer, an acrylonitrile monomer and methyl methacrylate to a butadiene rubber polymer, an acrylate-styrene-acrylonitrile graft copolymer (g-ASA) prepared by grafting a styrene monomer as the aromatic vinyl compound and an acrylonitrile monomer as the vinyl cyanide compound to a butyl acrylate rubber polymer, and the like. For example, g-MBS and the like may be used.

### (B2) Aromatic vinyl copolymer resin

The aromatic vinyl copolymer resin according to one embodiment may comprise an aromatic vinyl copolymer resin used in typical rubber-modified aromatic vinyl copolymer resins. For example, the aromatic vinyl copolymer resin may be a polymer of a monomer mixture comprising an aromatic vinyl monomer and a monomer copolymerizable with the aromatic vinyl monomer.

In some embodiments, the aromatic vinyl copolymer resin may be prepared by mixing the aromatic vinyl monomer with the monomer copolymerizable with the aromatic vinyl monomer, followed by polymerization of the mixture. Here, polymerization may be performed by any suitable polymerization method known in the art, such as emulsion polymerization, suspension polymerization, bulk polymerization, and the like.

In some embodiments, the aromatic vinyl monomer may comprise styrene, α-methyl styrene, β-methyl styrene, p-methyl styrene, p-t-butyl styrene, ethyl styrene, vinyl xylene, monochlorostyrene, dichlorostyrene, dibromostyrene, vinyl naphthalene, and the like. These may be used alone or as a mixture thereof. The aromatic vinyl copolymer resin may include the aromatic vinyl monomer in an amount of 10 wt% to 95 wt%, for example, 20 wt% to 90 wt%, based on 100 wt% of the aromatic vinyl copolymer resin. In some embodiments, the aromatic vinyl copolymer resin may include the aromatic vinyl monomer in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 wt%, based on 100 wt% of the aromatic vinyl copolymer resin. Further, according to some embodiments, the aromatic vinyl monomer can be present in an amount of from any of the foregoing amounts to any other of the foregoing amounts. Within this range, the thermoplastic resin composition can have good properties in terms of impact resistance, fluidity, and the like.

In some embodiments, the monomer copolymerizable with the aromatic vinyl monomer may comprise a vinyl cyanide monomer and/or an alkyl (meth)acrylic monomer. For example, the monomer copolymerizable with the aromatic vinyl monomer may comprise a vinyl cyanide monomer or a vinyl cyanide monomer and an alkyl (meth)acrylic monomer.

In some embodiments, the vinyl cyanide monomer may comprise acrylonitrile, methacrylonitrile, ethacrylonitrile, phenyl acrylonitrile, α-chloroacrylonitrile, and fumaronitrile, without being limited thereto. These monomers may be used alone or as a mixture thereof. For example, the vinyl cyanide monomer may comprise acrylonitrile, methacrylonitrile, and the like.

In some embodiments, the alkyl (meth)acrylic monomer may comprise (meth)acrylic acid and/or C₁ to C₁₀ alkyl (meth)acrylates. These monomers may be used alone or as a mixture thereof. For example, methyl methacrylate, methyl acrylate and the like may be used.

The aromatic vinyl copolymer resin may include the monomer copolymerizable with the aromatic vinyl monomer in an amount of 5 wt% to 90 wt%, for example, 10 wt% to 80 wt%, based on 100 wt% of the aromatic vinyl copolymer resin. In some embodiments, the aromatic vinyl copolymer resin may include the monomer copolymerizable with the aromatic vinyl monomer in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%, based on 100 wt% of the aromatic vinyl copolymer resin. Further, according to some embodiments, the monomer copolymerizable with the aromatic vinyl monomer can be present in an amount of from any of the foregoing amounts to any other of the foregoing amounts. Within this range, the thermoplastic resin composition can have good properties in terms of impact resistance, fluidity, and the like.

In some embodiments, the aromatic vinyl copolymer resin may have a weight average molecular weight (Mw) of 10,000 g/mol to 300,000 g/mol, for example, 15,000 g/mol to 150,000 g/mol, as measured by gel permeation chromatography (GPC). Within this range, the thermoplastic resin composition can have good mechanical strength, moldability, and the like.

In some embodiments, when the aromatic vinyl copolymer resin is present, the rubber-modified vinyl graft copolymer may be present in an amount of 10 wt% to 50 wt%, for example, 20 wt% to 45 wt%, based on 100 wt% of the rubber-modified aromatic vinyl copolymer resin, and the aromatic vinyl copolymer resin may be present in an amount of 50 to 90 wt%, for example, 55 wt% to 80 wt%, based on 100 wt% of the rubber-modified aromatic vinyl copolymer resin.

In these embodiments, the rubber-modified aromatic vinyl copolymer resin may include the rubber-modified vinyl graft copolymer in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, based on 100 wt% of the rubber-modified aromatic vinyl copolymer resin. Further, according to some embodiments, the rubber-modified vinyl graft copolymer can be present in an amount of from any of the foregoing amounts to any other of the foregoing amounts.

Also in these embodiments, the rubber-modified aromatic vinyl copolymer resin may include the aromatic vinyl copolymer resin in an amount of 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%, based on 100 wt% of the rubber-modified aromatic vinyl copolymer resin. Further, according to some embodiments, the aromatic vinyl copolymer resin can be present in an amount of from any of the foregoing amounts to any other of the foregoing amounts.

Within this range, the thermoplastic resin composition can exhibit good properties in terms of impact resistance, fluidity (molding processability), and the like.

The thermoplastic resin composition includes the rubber-modified aromatic vinyl copolymer resin in an amount of 3 parts by weight to 20 parts by weight, preferably in an amount of 5 parts by weight to 15 parts by weight, relative to 100 parts by weight of the polycarbonate resin. In some embodiments, the thermoplastic resin composition may include the rubber-modified aromatic vinyl copolymer resin in an amount of 3, 4, 5, 6, 7, 8, 9, 10, 11, 12, 13, 14, 15, 16, 17, 18, 19, or 20 parts by weight, relative to 100 parts by weight of the polycarbonate resin. Further, according to some embodiments, the rubber-modified aromatic vinyl copolymer resin can be present in an amount of from any of the foregoing amounts to any other of the foregoing amounts. If the content of the rubber-modified aromatic vinyl copolymer resin is less than 3 parts by weight relative to 100 parts by weight of the polycarbonate resin, the thermoplastic resin composition can suffer from deterioration in impact resistance and the like, and if the content of the rubber-modified aromatic vinyl copolymer resin exceeds 20 parts by weight, the thermoplastic resin composition can suffer from deterioration in flame retardancy, heat stability, dimensional stability, and the like.

### (C) Talc

Talc is used in a small amount together with the acicular inorganic fillers and the phosphorus flame retardant to improve various properties of the thermoplastic resin composition comprising the polycarbonate resin and the rubber-modified aromatic vinyl copolymer resin in terms of light shielding, impact resistance, dimensional stability, flame retardancy and balance therebetween, and has an average particle diameter (size) of 8 µm to 20 µm and a blackness degree L* of less than 90.

In some embodiments, the talc may be flake inorganic fillers and may have an average particle diameter of 8 µm to 20 µm, for example, 9 µm to 13 µm, as measured by a particle analyzer (Malvern Mastersizer 3000). In some embodiments, the talc may have an average particle diameter of 8, 9, 10, 11, 12, 13, 14, 15, 16, 17, 18, 19, or 20 µm. Further, according to some embodiments, the talc can have an average particle diameter of from any of the foregoing average particle diameters to any other of the foregoing average particle diameters. If the talc has an average particle diameter outside this range, the thermoplastic resin composition can suffer from deterioration in light shielding, impact resistance, and the like.

In some embodiments, the talc may have a blackness degree L* of less than 90, for example, 80 to 89, as measured using a Minolta colorimeter (CM-2500C). In some embodiments, the talc may have a blackness degree L* of 80, 81, 82, 83, 84, 85, 86, 87, 88, or 89. Further, according to some embodiments, the talc may have a blackness degree L* of from any of the foregoing blackness degree L* to any other of the foregoing blackness degree L*. If the blackness degree L* of the talc is 90 or more, the thermoplastic resin composition can suffer from deterioration in light shielding property and the like.

The thermoplastic resin composition includes the talc in an amount of 12 parts by weight to 28 parts by weight, preferably in an amount of 15 parts by weight to 25 parts by weight, relative to 100 parts by weight of the polycarbonate resin. In some embodiments, the thermoplastic resin composition may include the talc in an amount of 12, 13, 14, 15, 16, 17, 18, 19, 20, 21, 22, 23, 24, 25, 26, 27, or 28 parts by weight, relative to 100 parts by weight of the polycarbonate resin. Further, according to some embodiments, the talc can be present in an amount of from any of the foregoing amounts to any other of the foregoing amounts. If the content of the talc is less than 12 parts by weight relative to 100 parts by weight of the polycarbonate resin, the thermoplastic resin composition can suffer from deterioration in light shielding property, dimensional stability, and the like, and if the content of the talc exceeds 28 parts by weight, the thermoplastic resin composition can suffer from deterioration in impact resistance, heat stability, and the like.

### (D) Acicular inorganic fillers

The acicular inorganic fillers according to one embodiment are used together with talc and the phosphorus flame retardant to improve properties of the thermoplastic resin composition comprising the polycarbonate resin and the rubber-modified aromatic vinyl copolymer resin in terms of light shielding, impact resistance, dimensional stability, flame retardancy, and balance therebetween.

In some embodiments, the acicular inorganic fillers may comprise wollastonite, glass fiber, carbon fiber, basalt fiber, and a combination thereof. For example, wollastonite may be used.

In some embodiments, wollastonite is a white acicular calcium-based mineral and may be subjected to hydrophobic surface treatment on at least part of a surface thereof. Here, hydrophobic surface treatment may comprise, for example, coating wollastonite with an olefin, epoxy or silane material, without being limited thereto.

In some embodiments, the acicular inorganic fillers may have a cross-section diameter of 5 µm to 20 µm, for example, 10 µm to 15 µm, a pre-processing length of 10 mm to 500 mm, and a post-processing length of 50 µm to 200 µm, for example, 100 µm to 150 µm, as measured using a particle analyzer (Malvern Mastersizer 3000). Within this range, the thermoplastic resin composition can exhibit good properties in terms of dimensional stability, impact resistance, and the like.

The thermoplastic resin composition includes the acicular inorganic fillers in an amount of 5 parts by weight to 20 parts by weight, preferably in an amount of 7 parts by weight to 17 parts by weight, relative to 100 parts by weight of the polycarbonate resin. In some embodiments, the thermoplastic resin composition may include the acicular inorganic fillers in an amount of 5, 6, 7, 8, 9, 10, 11, 12, 13, 14, 15, 16, 17, 18, 19, or 20 parts by weight, relative to 100 parts by weight of the polycarbonate resin. Further, according to some embodiments, the acicular inorganic fillers can be present in an amount of from any of the foregoing amounts to any other of the foregoing amounts. If the content of the acicular inorganic fillers is less than 5 parts by weight relative to 100 parts by weight of the polycarbonate resin, the thermoplastic resin composition can suffer from deterioration in light shielding, dimensional stability, and the like, and if the content of the acicular inorganic fillers exceeds 20 parts by weight, the thermoplastic resin composition can suffer from deterioration in impact resistance, fluidity, external appearance, and the like.

In some embodiments, the talc (C) and the acicular inorganic fillers (D) may be present in a weight ratio (C:D) of 1:0.2 to 1:1.5, for example, 1:0.3 to 1:1. In some embodiments, the talc (C) and the acicular inorganic fillers (D) may be present in a weight ratio (C:D) of 1:0.2, 1:0.3, 1:0.4, 1:0.5, 1:0.6, 1:0.7, 1:0.8, 1:0.9, 1:1, 1:1.1, 1:1.2, 1:1.3, 1:1.4, or 1:1.5. Further, according to some embodiments, the talc (C) and the acicular inorganic fillers (D) may be present in a weight ratio (C:D) of from any of the foregoing ratios to any other of the foregoing ratios. Within this range, the thermoplastic resin composition can exhibit good properties in terms of light shielding, impact resistance, dimensional stability, and the like.

### (E) Phosphorus flame retardant

The phosphorus flame retardant according to one embodiment may comprise any typical phosphorus flame retardant used in typical flame retardant thermoplastic resin compositions. For example, the phosphorus flame retardant may comprise a phosphate compound, a phosphonate compound, a phosphinate compound, a phosphine oxide compound, a phosphazene compound, and a metal salt thereof. These compounds may be used alone or as a mixture thereto.

In some embodiments, the phosphorus flame retardant may comprise an aromatic phosphoric ester compound represented by Formula 1. 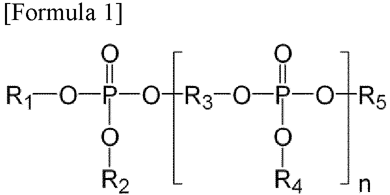 where R₁, R₂, R₄ and R₅ are each independently a hydrogen atom, a C₆ to C₂₀ (6 to 20 carbon atoms) aryl group, or a C₁ to C₁₀ alkyl group-substituted C₆ to C₂₀ aryl group; R₃ is a C₆ to C₂₀ arylene group or a C₁ to C₁₀ alkyl group-substituted C₆ to C₂₀ arylene group, for example, derivatives of a dialcohol, such as resorcinol, hydroquinone, bisphenol-A, or bisphenol-S; and n is an integer of 0 to 10, for example, 0 to 4.

When n is 0 in Formula 1, examples of the aromatic phosphoric ester compound may comprise diaryl phosphates, such as diphenyl phosphate and the like, triphenyl phosphate, tricresyl phosphate, trixylenyl phosphate, tri(2,6-dimethylphenyl) phosphate, tri(2,4,6-trimethylphenyl)phosphate, tri(2,4-di-tert-butylphenyl) phosphate, and tri(2,6-dimethylphenyl)phosphate; and when n is 1 in Formula 1, examples of the aromatic phosphoric ester compound may comprise bisphenol-A bis(diphenyl phosphate), resorcinol bis(diphenyl phosphate), resorcinol bis[bis(2,6-dimethylphenyl)phosphate], resorcinol bis[bis(2,4-di-tert-butylphenyl)phosphate], hydroquinone bis[bis(2,6-dimethylphenyl)phosphate], and hydroquinone bis[bis(2,4-di-tert-butylphenyl)phosphate], without being limited thereto. These compounds may be used alone or as a mixture thereof.

The thermoplastic resin composition includes the phosphorus flame retardant in an amount of 10 parts by weight to 30 parts by weight, preferably in an amount of 15 parts by weight to 25 parts by weight, relative to 100 parts by weight of the polycarbonate resin. In some embodiments, the thermoplastic resin composition may include the phosphorus flame retardant in an amount of 10, 11, 12, 13, 14, 15, 16, 17, 18, 19, 20, 21, 22, 23, 24, 25, 26, 27, 28, 29, or 30 parts by weight, relative to 100 parts by weight of the polycarbonate resin. Further, according to some embodiments, the phosphorus flame retardant can be present in an amount of from any of the foregoing amounts to any other of the foregoing amounts. If the content of the phosphorus flame retardant is less than 10 parts by weight relative to 100 parts by weight of the polycarbonate resin, the thermoplastic resin composition can suffer from deterioration in flame retardancy, fluidity, and the like, and if the content of the phosphorus flame retardant exceeds 30 parts by weight, the thermoplastic resin composition can suffer from deterioration in impact resistance, heat resistance, and the like.

The thermoplastic resin composition according to one embodiment may further comprise dyes and/or pigments used in a typical thermoplastic resin composition to impart a color to a molded article while improving light shielding and the like.

In some embodiments, the thermoplastic resin composition may include the dyes and/or pigments in an amount of 5 parts by weight to 15 parts by weight, for example, 6 parts by weight to 10 parts by weight, relative to 100 parts by weight of the polycarbonate resin. In some embodiments, the thermoplastic resin composition may include the dye(s) and/or pigment(s) in an amount of 5, 6, 7, 8, 9, 10, 11, 12, 13, 14, or 15 parts by weight, relative to 100 parts by weight of the polycarbonate resin. Further, according to some embodiments, the dye(s) and/or pigment(s) can be present in an amount of from any of the foregoing amounts to any other of the foregoing amounts. Within this range, the thermoplastic resin composition (molded article) can exhibit a good color, good light shielding, and the like.

The thermoplastic resin composition according to one embodiment may further comprise additives. The thermoplastic resin composition may include the additives may comprise antioxidants, anti-dripping agents, lubricants, release agents, anti-static agents, stabilizers, and mixtures thereof, without being limited thereto. The additives may be present in an amount of 0.001 parts by weight to 40 parts by weight, for example, 0.1 parts by weight to 10 parts by weight, relative to 100 parts by weight of the polycarbonate resin. In some embodiments, the thermoplastic resin composition may include the additive(s) in an amount of 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight, relative to 100 parts by weight of the polycarbonate resin. Further, according to some embodiments, the additive(s) can be present in an amount of from any of the foregoing amounts to any other of the foregoing amounts.

The thermoplastic resin composition according to one embodiment may be prepared in pellet form by mixing the aforementioned components, followed by melt extrusion in a typical twin-screw type extruder at 240°C to 300°C, for example, at 250°C to 290°C.

The thermoplastic resin composition has a light transmittance of 0.16% or less, preferably of 0.01% to 0.15%, as measured on a 1 mm thick specimen in accordance with ASTM D1003. In some embodiments, the thermoplastic resin composition may have a light transmittance of 0.01, 0.02, 0.03, 0.04, 0.05, 0.06, 0.07, 0.08, 0.09, 0.10, 0.11, 0.12, 0.13, 0.14, 0.15, or 0.16%. Further, according to some embodiments, the thermoplastic resin composition may have a light transmittance of from any of the foregoing light transmittances to any other of the foregoing light transmittances.

The thermoplastic resin composition has a notched Izod impact strength of 5.5 kgf·cm/cm to 20 kgf·cm/cm, preferably of 5.7 kgf·cm/cm to 15 kgf·cm/cm, as measured on a 1/8" specimen in accordance with ASTM D256. In some embodiments, the thermoplastic resin composition may have a notched Izod impact strength of 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20 kgf·cm/cm. Further, according to some embodiments, the thermoplastic resin composition may have a notched Izod impact strength of from any of the foregoing notched Izod impact strengths to any other of the foregoing notched Izod impact strengths.

In some embodiments, the thermoplastic resin composition may have a coefficient of linear expansion of 30 µm/m·°C to 50 µm/m·°C, for example, 31 µm/m·°C to 48 µm/m·°C, as measured on an injection-molded specimen having a size of 10 mm × 10 mm × 6.4 mm while raising a temperature from 0°C to 60°C at a rate of 5°C/min in accordance with ASTM D696. In some embodiments, the thermoplastic resin composition may have a coefficient of linear expansion of 30, 31, 32, 33, 34, 35, 36, 37, 38, 39, 40, 41, 42, 43, 44, 45, 46, 47, 48, 49, or 50 µm/m·°C. Further, according to some embodiments, the thermoplastic resin composition may have a coefficient of linear expansion of from any of the foregoing coefficients of linear expansion to any other of the foregoing coefficients of linear expansion.

In some embodiments, the thermoplastic resin composition may have a flame retardancy of V-1 or higher (e.g., V-1 or V-0), as measured on a 1.0 mm thick injection-molded specimen by a UL-94 vertical test method.

A molded article according to the present invention is formed of the thermoplastic resin composition.

In some embodiments, the molded article may be a plastic member of a housing of an electronic product (device), which comprises a metal frame and a plastic member adjoining at least one surface of the metal frame.

FIG. 1 is a schematic sectional view of a housing of an electronic product according to one embodiment of the present invention. It should be understood that the drawings are not to precise scale and the dimensions of components are exaggerated for clarity of description in the drawings. Referring to FIG. 1, the housing of an electronic product according to one embodiment comprises a metal frame 10 and at least one plastic member 20 adjoining at least one surface of the metal frame 10, wherein the plastic member is formed of the thermoplastic resin composition according to the embodiments of the invention.

In some embodiments, the metal frame 10 and the plastic member 20 may have various shapes without being limited to the shapes shown in the drawings. The metal frame 10 and the plastic member 20 form an adjoining structure in which the metal frame 10 adjoins at least one surface of the plastic member 20. The adjoining structure may be realized by bonding or insertion, but is not limited thereto.

In some embodiments, the metal frame 10 may be a stainless steel frame or may be selected from the group of any commercially available products, which can be applied to a typical housing of electronic products.

In some embodiments, the plastic member 20 may be formed of the thermoplastic resin composition by various molding methods, such as injection molding, extrusion molding, vacuum molding, casting, and the like. Specifically, the plastic member 20 may be formed by hot-water molding, steam molding (RHCM (rapid heat cycle molding)) or the like, and may be a front cover or a rear cover of a 22" to 85" thin film type TV, a thin film monitor, and the like. The plastic member 20 is applicable to external appearance specifications, such as a hairline pattern, a corrosion pattern, and the like.

Next, the present invention will be described in more detail with reference to examples. However, it should be noted that these examples are provided for illustration only and should not be construed in any way as limiting the invention.

### EXAMPLE

Details of components used in Examples and Comparative Examples are as follows.

### (A) Polycarbonate resin

A bisphenol-A polycarbonate resin (weight average molecular weight: 25,000 g/mol) was used.

### (B) Rubber-modified aromatic vinyl copolymer resin

A rubber-modified vinyl graft copolymer (g-MBS, Manufacturer: Dow, Product Name: EXL2616) prepared through graft copolymerization of a monomer mixture comprising styrene and methyl methacrylate to butadiene rubbers having an average particle diameter of 0.15 µm was used.

### (C) Talc

(C1) Talc (Manufacturer: KOCH, Product Name: KCP-04, Average particle size: 12 µm, Blackness degree (L* value): 85) was used.
(C2) Talc (Manufacturer: KOCH, Product Name: KCKA-400, Average particle size: 12 µm, Blackness degree (L* value): 90) was used.
(C3) Talc (Manufacturer: KOCH, Product Name: KCM-6300C, Average particle size: 12 µm, Blackness degree (L* value): 95) was used.
(C4) Talc (Manufacturer: KOCH, Product Name: KCP-2000, Average particle size: 5 µm, Blackness degree (L* value): 85) was used.
(C5) Talc (Manufacturer: KOCH, Product Name: NAP-400, Average particle size: 21 µm, Blackness degree (L* value): 85) was used.

### (D) Acicular inorganic fillers

Wollastonite (Manufacturer: Hubei, Product Name: W4101, Average particle size: 6 µm) was used.

### (E) Phosphorus flame retardant

An oligomer type bisphenol-A diphosphate (Manufacturer: Yoke Chemical, Product Name: YOKE BDP) was used.

### (F) Pigment

As a white pigment, titanium dioxide (TiO₂, Manufacturer: CITIC Titanium Industry, Product Name: CR-211) was used.

### Examples 1 to 11 and Comparative Examples 1 to 12

The aforementioned components were mixed in amounts as listed in Tables 1, 2, 3 and 4, followed by extrusion at 250°C, thereby preparing a thermoplastic resin composition in pellet form. Here, extrusion was performed using a twin-screw extruder (L/D: 44, Φ: 45 mm). The prepared pellets were dried at 80°C for 4 hours or more and then subjected to injection molding using a 6 oz. injection machine (molding temperature: 250°C, mold temperature: 60°C), thereby preparing a specimen. The prepared specimen was evaluated as to the following properties. Results are shown in Tables 1, 2, 3 and 4.

### Property Evaluation

(1) Light shielding property: Light transmittance (total light transmittance, unit: %) was measured on a 1 mm thick specimen using a haze meter NDH 2000 (Nippon Denshoku Co., Ltd.) in accordance with ASTM D1003.
(2) Impact resistance: Notched Izod impact strength (unit: kgf·cm/cm) was measured on a 1/8" thick specimen in accordance with ASTM D256.
(3) Dimensional stability: Coefficient of linear expansion (unit: µm/m·°C) was measured on an injection-molded specimen having a size of 10 mm × 10 mm × 6.4 mm while raising the temperature from 0°C to 60°C at a rate of 5°C/min in accordance with ASTM D696.
(4) Flame retardancy: Flame retardancy was measured on a 1.0 mm thick injection-molded specimen in accordance with the UL 94 vertical test standard.

**Table 1**

| | Example | | | | |
|---|---|---|---|---|---|
| | 1 | 2 | 3 | 4 | 5 |
| (A) (parts by weight) | 100 | 100 | 100 | 100 | 100 |
| (B) (parts by weight) | 10 | 5 | 15 | 10 | 10 |
| (C1) (parts by weight) | 18 | 18 | 18 | 15 | 25 |
| (C2) (parts by weight) | - | - | - | - | - |
| (C3) (parts by weight) | - | - | - | - | - |
| (C4) (parts by weight) | - | - | - | - | - |
| (C5) (parts by weight) | - | - | - | - | - |
| (D) (parts by weight) | 12 | 12 | 12 | 12 | 12 |
| (E) (parts by weight) | 21 | 21 | 21 | 21 | 21 |
| (F) (parts by weight) | - | - | - | - | - |
| Light transmittance (%) | 0.12 | 0.12 | 0.12 | 0.15 | 0.09 |
| Notched Izod impact strength (kgf·cm/cm) | 7.3 | 6.6 | 7.9 | 7.6 | 6.8 |
| Coefficient of linear expansion (µm/m·°C) | 39 | 37 | 42 | 43 | 33 |
| Flame retardancy(1.0T) | V-1 | V-1 | V-1 | V-1 | V-1 |

**Table 2**

| | Example | | | | | |
|---|---|---|---|---|---|---|
| | 6 | 7 | 8 | 9 | 10 | 11 |
| (A) (parts by weight) | 100 | 100 | 100 | 100 | 100 | 100 |
| (B) (parts by weight) | 10 | 10 | 10 | 10 | 10 | 10 |
| (C1) (parts by weight) | 18 | 18 | 18 | 18 | 18 | 20 |
| (C2) (parts by weight) | - | - | - | - | - | - |
| (C3) (parts by weight) | - | - | - | - | - | - |
| (C4) (parts by weight) | - | - | - | - | - | - |
| (C5) (parts by weight) | - | - | - | - | - | - |
| (D) (parts by weight) | 7 | 17 | 12 | 12 | 12 | 12 |
| (E) (parts by weight) | 21 | 21 | 15 | 25 | 21 | 21 |
| (F) (parts by weight) | - | - | - | - | 8 | 6 |
| Light transmittance (%) | 0.13 | 0.10 | 0.12 | 0.12 | 0.01 | 0.02 |
| Notched Izod impact strength (kgf·cm/cm) | 7.5 | 6.9 | 7.5 | 6.2 | 5.7 | 6.2 |
| Coefficient of linear expansion (µm/m·°C) | 46 | 31 | 38 | 39 | 38 | 36 |
| Flame retardancy | V-1 | V-1 | V-1 | V-1 | V-1 | V-1 |

**Table 3**

| | Comparative Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 1 | 25 | 10 | 10 | 10 | 10 |
| (C1) (parts by weight) | 18 | 18 | 10 | 30 | - | - |
| (C2) (parts by weight) | - | - | - | - | 18 | - |
| (C3) (parts by weight) | - | - | - | - | - | 18 |
| (C4) (parts by weight) | - | - | - | - | - | - |
| (C5) (parts by weight) | - | - | - | - | - | - |
| (D) (parts by weight) | 12 | 12 | 12 | 12 | 12 | 12 |
| (E) (parts by weight) | 21 | 21 | 21 | 21 | 21 | 21 |
| (F) (parts by weight) | - | - | - | - | - | - |
| Light transmittance (%) | 0.13 | 0.11 | 0.18 | 0.08 | 0.21 | 0.24 |
| Notched Izod impact strength (kgf·cm/cm) | 3.1 | 10.2 | 7.9 | 3.9 | 7.4 | 7.3 |
| Coefficient of linear expansion (µm/m·°C) | 32 | 47 | 48 | 31 | 39 | 39 |
| Flame retardancy | V-0 | V-2 | V-1 | V-1 | V-1 | V-1 |

**Table 4**

| | Comparative Example | | | | | |
|---|---|---|---|---|---|---|
| | 7 | 8 | 9 | 10 | 11 | 12 |
| (A) (parts by weight) | 100 | 100 | 100 | 100 | 100 | 100 |
| (B) (parts by weight) | 10 | 10 | 10 | 10 | 10 | 10 |
| (C1) (parts by weight) | - | - | 18 | 18 | 18 | 18 |
| (C2) (parts by weight) | - | - | - | - | - | - |
| (C3) (parts by weight) | - | - | - | - | - | - |
| (C4) (parts by weight) | 18 | - | - | - | - | - |
| (C5) (parts by weight) | - | 18 | - | - | - | - |
| (D) (parts by weight) | 12 | 12 | 1 | 25 | 12 | 12 |
| (E) (parts by weight) | 21 | 21 | 21 | 21 | 5 | 35 |
| (F) (parts by weight) | - | - | - | - | - | - |
| Light transmittance (%) | 0.11 | 0.19 | 0.17 | 0.08 | 0.12 | 0.14 |
| Notched Izod impact strength (kgf·cm/cm) | 5.2 | 7.7 | 8.6 | 4.7 | 7.8 | 4.5 |
| Coefficient of linear expansion (µm/m·°C) | 36 | 43 | 52 | 30 | 37 | 40 |
| Flame retardancy | V-1 | V-1 | V-1 | V-1 | V-2 | V-0 |

From the result, it could be seen that the thermoplastic resin compositions according to the present invention exhibited good properties in terms of light shielding (light transmittance), impact resistance (notched Izod impact strength), dimensional stability (coefficient of linear expansion), flame retardancy, and balance therebetween.

Conversely, it could be seen that the composition of Comparative Example 1 prepared using an insufficient amount of the rubber-modified aromatic vinyl copolymer resin suffered from deterioration in impact resistance and the like, and the composition of Comparative Example 2 prepared using an excess of the rubber-modified aromatic vinyl copolymer resin suffered from deterioration inflame retardancy and the like. It could be seen that the composition of Comparative Example 3 prepared using an insufficient amount of talc suffered from deterioration in light shielding, and the like; the composition of Comparative Example 4 prepared using an excess of talc suffered from deterioration in impact resistance, and the like; the composition of Comparative Example 5 prepared using talc (C2) suffered from deterioration in light shielding, and the like; the composition of Comparative Example 6 prepared using talc (C3) suffered from deterioration in light shielding and the like; the composition of Comparative Example 7 prepared using talc (C4) suffered from deterioration in impact resistance and the like; and the composition of Comparative Example 8 prepared using talc (C5) suffered from deterioration in light shielding, and the like. It could be seen that the composition of Comparative Example 9 prepared using an insufficient amount of the acicular inorganic fillers suffered from deterioration in light shielding, dimensional stability, and the like, and the composition of Comparative Example 10 prepared using an excess of the acicular inorganic fillers suffered from deterioration in impact resistance and the like. Further, It could be seen that the composition of Comparative Example 11 prepared using an insufficient amount of the phosphorus flame retardant suffered from deterioration inflame retardancy and the like, and the composition of Comparative Example 12 prepared using an excess of the phosphorus flame retardant suffered from deterioration in impact resistance, and the like.

## Claims

1. A thermoplastic resin composition comprising:
100 parts by weight of a polycarbonate resin;
3 parts by weight to 20 parts by weight of a rubber-modified aromatic vinyl copolymer resin;
12 parts by weight to 28 parts by weight of talc having an average particle size of 8 µm to 20 µm and a blackness degree L* of less than 90, both parameters being measured as indicated in the specification.
5 parts by weight to 20 parts by weight of acicular inorganic fillers; and
10 parts by weight to 30 parts by weight of a phosphorus flame retardant,
wherein the thermoplastic resin composition has a light transmittance of 0.16% or less, as measured on a 1 mm thick specimen in accordance with ASTM D1003, and
wherein the thermoplastic resin composition has a notched Izod impact strength of 5.5 kgf·cm/cm (*9.8 J/m) to 20 kgf·cm/cm (*9.8 J/m), as measured on a 1/8 inch (*2.54 cm) specimen in accordance with ASTM D256.

2. The thermoplastic resin composition according to claim 1, wherein the rubber-modified aromatic vinyl copolymer resin comprises a rubber-modified vinyl graft copolymer.

3. The thermoplastic resin composition according to claim 2, wherein the rubber-modified vinyl graft copolymer is prepared through graft copolymerization of a monomer mixture comprising an aromatic vinyl monomer and a monomer copolymerizable with the aromatic vinyl monomer to a rubber polymer.

4. The thermoplastic resin composition according to any one of claims 1 to 3, wherein the acicular inorganic fillers comprise at least one of wollastonite, glass fiber, carbon fiber, and basalt fiber.

5. The thermoplastic resin composition according to any one of claims 1 to 4, wherein the talc and the acicular inorganic fillers are present in a weight ratio (talc:acicular inorganic fillers) of 1:0.2 to 1:1.5.

6. The thermoplastic resin composition according to any one of claims 1 to 5, further comprising:
5 parts by weight to 15 parts by weight of at least one of dyes and pigments relative to 100 parts by weight of the polycarbonate resin.

7. The thermoplastic resin composition according to any one of claims 1 to 6, wherein the thermoplastic resin composition has a coefficient of linear expansion of 30 µm/m·°C to 50 µm/m·°C, as measured on an injection-molded specimen having a size of 10 mm × 10 mm × 6.4 mm while raising a temperature from 0°C to 60°C at a rate of 5°C/min in accordance with ASTM D696.

8. The thermoplastic resin composition according to any one of claims 1 to 7, wherein the thermoplastic resin composition has a flame retardancy of V-1 or higher, as measured on a 1.0 mm thick injection molded-specimen by a UL-94 vertical test method.

9. A molded article produced from the thermoplastic resin composition according to any one of claims 1 to 8.

10. The molded article according to claim 9, wherein the molded article is a plastic member of an electronic device housing comprising a metal frame and the plastic member adjoining at least one surface of the metal frame.

## Patentansprüche

1. Thermoplastische Harzzusammensetzung, umfassend:
100 Gewichtsteilen eines Polycarbonatharzes;
3 Gewichtsteile bis 20 Gewichtsteile eines kautschukmodifizierten aromatischen Vinylcopolymerharzes;
12 Gewichtsteile bis 28 Gewichtsteile Talk, der eine durchschnittliche Partikelgröße von 8 µm bis 20 µm und einen Schwarzgrad L* von weniger als 90 aufweist, wobei beide Parameter wie in der Spezifikation angegeben gemessen werden.
5 Gewichtsteile bis 20 Gewichtsteile nadelförmiger anorganischer Füllstoffe; und
10 Gewichtsteile bis 30 Gewichtsteile eines Phosphor-Flammschutzmittels,
wobei die thermoplastische Harzzusammensetzung eine Lichtdurchlässigkeit von 0,16% oder weniger, an einer 1 mm dicken Probe gemäß ASTM D1003 gemessen, aufweist, und
wobei die thermoplastische Harzzusammensetzung eine gekerbte Izod-Schlagzähigkeit von 5,5 kgf·cm (*9,8 J/m) bis 20 kgf·cm (*9,8 J/m), an einer 1/8 Zoll (*2,54 cm) großen Probe gemäß ASTM D256 gemessen, aufweist.

2. Thermoplastische Harzzusammensetzung nach Anspruch 1, wobei das kautschukmodifizierte aromatische Vinylcopolymerharz ein kautschukmodifiziertes Vinylpfropfcopolymer umfasst.

3. Thermoplastische Harzzusammensetzung nach Anspruch 2, wobei das kautschukmodifizierte Vinylpfropfcopolymer durch Pfropfcopolymerisation eines Monomergemaisches, das ein aromatisches Vinylmonomer und ein Monomer umfasst, das mit dem aromatischen Vinylmonomer zu einem Kautschukpolymer copolymerisierbar ist.

4. Thermoplastische Harzzusammensetzung nach einem der Ansprüche 1 bis 3, wobei die nadelförimgen anorganischen Füllstoffe mindestens einen aus Wollastonit, Glasfaser, Kohlenstofffaser und Basaltfaser umfassen.

5. Thermoplastische Harzzusammensetzung nach einem der Ansprüche 1 bis 4, wobei der Talk und die nadelförmigen anorganischen Füllstoffe in einem Gewichtsverhältnis (Talkum:nadelförmige anorganische Füllstoffe) von 1:0,2 bis 1:1,5 vorhanden sind.

6. Thermoplastische Harzzusammensetzung nach einem der Ansprüche 1 bis 5, weiter umfassend:
5 Gewichtsteile bis 15 Gewichtsteile mindestens eines von Farbstoffen und Pigmenten im Verhältnis zu 100 Gewichtsteilen des Polycarbonatharzes.

7. Thermoplastische Harzzusammensetzung nach einem der Ansprüche 1 bis 6, wobei die thermoplastische Harzzusammensetzung einen linearen Ausdehnungskoeffizienten von 30 µm/m·°C bis 50 µm/ m·°C, wie an einer spritzgegossenen Probe, die eine Größe von 10 mm × 10 mm × 6,4 mm aufweist, gemessen, aufweist, während eine Temperatur von 0°C bis 60°C mit einer Rate von 5°C/min in Übereinstimmung mit ASTM D696 angehoben wird.

8. Thermoplastische Harzzusammensetzung nach einem der Ansprüche 1 bis 7, wobei die thermoplastische Harzzusammensetzung einen Flammschutz von V-1 oder höher, wie an einer 1,0 mm dicken Probe gemäß einem vertikalen UL-94-Prüfverfahren gemessen, aufweist.

9. Formteil, das aus der thermoplastischen Harzzusammensetzung nach einem der Ansprüche 1 bis 8 hergestellt wird.

10. Formteil nach Anspruch 9, wobei das Formteil ein Kunststoffelement eines Gehäuses einer elektronischen Vorrichtung ist, die einen Metallrahmen und das Kunststoffelement umfasst, das mindestens an eine Oberfläche des Glasrahmens angrenzt.

## Revendications

1. Composition de résine thermoplastique comprenant :
100 parties en poids d'une résine de polycarbonate ;
3 parties en poids à 20 parties en poids d'une résine de copolymère vinylique aromatique modifié par du caoutchouc ;
12 parties en poids à 28 parties en poids de talc ayant une taille de particule moyenne allant de 8 µm à 20 µm et un degré de noirceur L* inférieur à 90, les deux paramètres étant mesurés comme indiqué dans la description,
5 parties en poids à 20 parties en poids de charges inorganiques aciculaires ; et
10 parties en poids à 30 parties en poids d'un ignifugeant à base de phosphore,
dans laquelle la composition de résine thermoplastique présente une transmittance de lumière inférieure ou égale à 0,16%, telle que mesurée sur un spécimen de 1 mm d'épaisseur conformément à la norme ASTM D1003, et
dans laquelle la composition de résine thermoplastique présente une résistance au choc Izod sur barreau entaillé allant de 5,5 kgf·cm/cm (*9,8 J/m) à 20 kgf·cm/cm (*9,8 J/m), telle que mesurée sur un spécimen de 1/8 de pouce (*2,54 cm) conformément à la norme ASTM D256.

2. Composition de résine thermoplastique selon la revendication 1, dans laquelle la résine de copolymère vinylique aromatique modifié par du caoutchouc comprend un copolymère greffé vinylique modifié par du caoutchouc.

3. Composition de résine thermoplastique selon la revendication 2, dans laquelle le copolymère greffé vinylique modifié par du caoutchouc est préparé par copolymérisation par greffage d'un mélange de monomères comprenant un monomère vinylique aromatique et un monomère copolymérisable avec le monomère vinylique aromatique sur un polymère de caoutchouc.

4. Composition de résine thermoplastique selon l'une quelconque des revendications 1 à 3, dans laquelle les charges inorganiques aciculaires comprennent au moins l'une parmi la wollastonite, la fibre de verre, la fibre de carbone et la fibre de basalte.

5. Composition de résine thermoplastique selon l'une quelconque des revendications 1 à 4, dans laquelle le talc et les charges inorganiques aciculaires sont présents dans un rapport en poids (talc : charges inorganiques aciculaires) allant de 1:0,2 à 1:1,5.

6. Composition de résine thermoplastique selon l'une quelconque des revendications 1 à 5, comprenant en outre :
5 parties en poids à 15 parties en poids d'au moins l'un parmi des colorants et des pigments par rapport à 100 parties en poids de la résine de polycarbonate.

7. Composition de résine thermoplastique selon l'une quelconque des revendications 1 à 6, dans laquelle la composition de résine thermoplastique a un coefficient de dilatation linéaire allant de 30 µm/m·°C à 50 µm/m·°C, tel que mesuré sur un spécimen moulé par injection ayant une dimension de 10 mm × 10 mm × 6,4 mm, en augmentant la température de 0 °C à 60 °C à une vitesse de 5 °C/min, conformément à la norme ASTM D696.

8. Composition de résine thermoplastique selon l'une quelconque des revendications 1 à 7, dans laquelle la composition de résine thermoplastique présente une ininflammabilité supérieure ou égale à V-1, telle que mesurée sur un spécimen moulé par injection d'une épaisseur de 1,0 mm selon la méthode d'essai verticale UL-94.

9. Article moulé produit à partir de la composition de résine thermoplastique selon l'une quelconque des revendications 1 à 8.

10. Article moulé selon la revendication 9, dans lequel l'article moulé est un élément en plastique d'un boîtier de dispositif électronique comprenant un cadre métallique et l'élément en plastique adjacent à au moins une surface du cadre métallique.
